Europäisches Patentamt

European Patent Office

Office européen des brevets

(19)

(11) Veröffentlichungsnummer: **0 356 619 B1**

# EUROPÄISCHE PATENTSCHRIFT

(12)

(45) Veröffentlichungstag der Patentschrift: **04.11.92**

(51) Int. Cl.⁵: **F16J 15/34**

(21) Anmeldenummer: **89108299.2**

(22) Anmeldetag: **09.05.89**

(54) **Gleitringdichtung.**

(30) Priorität: **01.09.88 DE 3829702**

(43) Veröffentlichungstag der Anmeldung:
**07.03.90 Patentblatt 90/10**

(45) Bekanntmachung des Hinweises auf die
Patenterteilung:
**04.11.92 Patentblatt 92/45**

(84) Benannte Vertragsstaaten:
**AT BE DE ES FR GB IT SE**

(56) Entgegenhaltungen:
**WO-A-88/04379**
**DE-A- 1 904 727**
**DE-A- 3 124 661**
**DE-B- 1 100 410**

(73) Patentinhaber: **Firma Carl Freudenberg**
**Höhnerweg 2-4**
**W-6940 Weinheim/Bergstrasse(DE)**

(72) Erfinder: **Forch, Hans**
**Sandbuckelweg 29**
**W-6943 Birkenau(DE)**

EP 0 356 619 B1

Rank Xerox (UK) Business Services

# Beschreibung

Die Erfindung betrifft eine Gleitringdichtung nach dem Oberbegriff von Anspruch 1.

Eine solche Gleitringdichtung ist aus der DE-C-1 100 410 bekannt. Der Gleitring liegt dabei mit einer sich in radialer Richtung erstreckenden Gleitfläche an der Gegenfläche und braucht eine ständige Anpressung an die Gegenfläche, um den Aufbau eines Gegendrucks im Dichtspalt zu verhindern. Der Gleitring Zeigt bereits nach relativ kurzer Gebrauchsdauer starke Abnutzungserscheinungen der Gleitfläche, welche insbesondere in einem radialen Abstand von der dem Druck des abzudichtenden Mediums ausgesetzten Umfangsfläche deutlich in Erscheinung treten.

Aus der DE-A-19 04 727 ist ein Dichtungsring zur Abdichtung einer Welle gegenüber einer zwei Räume unterschiedlichen Drucks trennenden Wand bekannt, der unter Spannung auf die Welle aufgezogen ist und eine einstückig angeformte Dichtlippe aufweist, die die abzudichtende Stirnfläche der Wand unter ihrer Eigenspannung und unter dem Einfluß des auf sie wirkenden Druckes abdichtet. Der Dichtungsring besteht aus einem gummielastischen Werkstoff. Dabei ist allerdings zu beachten, daß der Dichtungsring während einer langen Gebrauchsdauer, bedingt durch Relaxationserscheinungen wenig formbeständig ist, so daß gute Gebrauchseigenschaften während einer langen Gebrauchsdauer nicht sicher zu gewährleisten sind. Auch die Montage des Dichtungsringes, der unter Spannung auf die Welle aufgezogen und aufgrund dieser Spannung in seiner Lage gehalten wird, ist in fertigungstechnischer Hinsicht wenig befriedigend. Abgesehen davon, ist eine selbsttätige Nachstellung der Dichtlippe in Richtung der Gegenfläche bei eintretendem Verschleiß nur in begrenztem Umfange durch die axiale Vorspannung der Dichtlippe in Richtung der Gegenfläche möglich.

Der Erfindung liegt die Aufgabe zugrunde, eine Gleitringdichtung der eingangs genannten Art derart weiterzuentwickeln, daß die Montage vereinfacht wird und daß sich ein ausgezeichnetes Abdichtungsergebnis während einer langen Gebrauchsdauer ergibt.

Diese Aufgabe wird erfindungsgemäß bei einer Gleitringdichtung der eingangs genannten Art mit den kennzeichnenden Merkmalen von Anspruch 1 gelöst.

Auf vorteilhafte Ausgestaltungen nehmen die Unteransprüche Bezug.

Bei der erfindungsgemäßen Gleitringdichtung ist es vorgesehen, daß der Gleitring mit einer bei seiner Herstellung angeformten, das Profil axial in Richtung der Gegenfläche überragenden Dichtkante versehen ist, wobei die Dichtkante einen Durchmesser aufweist, der im wesentlichen übereinstimmt mit dem Durchmesser der dem Druck P des abzudichtenden Mediums ausgesetzten Umfangsfläche und daß der Gleitring durch den Druck P des abzudichtenden Mediums in Richtung der Gegenfläche verschoben wird, wodurch die Dichtkante in das Profil des Gleitringes einfedert. Der Gleitring ist an einem Stützring festgelegt, wobei an dem Stützring eine Dichtlippe aus gummielastischem Werkstoff angeformt ist, die unter elastischer Vorspannung an eine Zylinderfläche des Gehäuses angepreßt ist. Die zwischen der Zylinderfläche und der Dichtkante ermittelbare hydraulisch wirksame Fläche mit der radialen Erstreckung F wird so gering bemessen, daß sich unter normalen Betriebsbedingungen nur eine geringe Einfederung der Dichtkante in das Profil des Gleitringes ergibt. Die spezifische Flächenpressung, der die Gleitfläche des Gleitringes unter normalen Betriebsbedingungen ausgesetzt ist, ist hierdurch in einem radialen Abstand von der dem Druck des abzudichtenden Mediums ausgesetzten Umfangsfläche reduziert, was einen verminderten Verschleiß in diesem Bereich zur Folge hat. Selbst bei der Abdichtung von Gasen wird hierdurch eine deutlich verbesserte Gebrauchsdauer der erfindungsgemäßen Gleitringdichtung erzielt.

Um eine selbsttätige Nachstellung des Gleitringes in Richtung der Gegenfläche bei eintretendem Verschleiß zu ermöglichen, ist es erforderlich, den Gleitring nicht nur unverdrehbar, sondern darüberhinaus in axialer Richtung verschiebbar in dem abzudichtenden Gehäuse abzustützen. Um diesem Zweck gerecht zu werden ist es möglich, den Gleitring durch ein faltenbalgähnliches Gebilde mit dem Gehäuse zu verbinden.

Als vorteilhaft im Hinblick auf die Montage und die Herstellbarkeit hat es sich erwiesen, wenn der Gleitring an einem Stützring festgelegt ist, wenn an dem Stützring eine Dichtlippe aus gummielastischem Werkstoff angeformt ist und wenn die Dichtlippe unter einer elastischen Vorspannung an eine Zylinderfläche angepreßt ist. Der Durchmesser der Zylinderfläche ist bei einer Ausführung, bei der die Dichtkante im Bereich der inneren Umfangsfläche des Gleitringes vorgesehen ist, größer als der Durchmesser derselben, bei einer Ausführung, bei der die Dichtkante im Bereich der äußeren Umfangsfläche des Gleitringes vorgesehen ist, kleiner als der Durchmesser derselben. Hierdurch wird gewährleistet, daß der Druck P des abzudichtenden Mediums stets eine Anpreßung der Dichtkante an die Gegenfläche bewirkt. Die Differenz zwischen dem jeweiligen Durchmesser der Zylinderfläche und dem Durchmesser der Dichtkante kann indessen so gering bemessen sein, daß die im Bereich der Dichtkante unter normalen Betriebsbedingungen wirksame, spezifische Flächenpressung nur sehr gering ist. Auch bei sehr großen Durchmessern der Dichtkanten und sehr großen Drücken des abzudichtenden Mediums läßt sich hierdurch bei Gewährleistung eines ausgezeichneten Abdichtungsergebnisses eine hervorragende Gebrauchsdauer erzielen. Bei reduzierter Druckbelastung kann es ausreichend sein, wenn innerhalb der diesbezüglichen Abstimmung die zwischen der Zylinderfläche und der Dichtkante ermittelbare hydraulisch wirksame Fläche mit der radialen Erstreckung so gering bemessen wird, daß sich unter normalen Betriebsbedingungen nur eine geringe Einfederung der Dichtkante in das Profil des Gleitringes ergibt. Auch bei einer sehr lange anhaltenden Dauer dieses Zustandes ist die Einfederung von konstanter Größe insofern, als der Gleitring im wesentlichen aus PTFE besteht und damit aus einem Werkstoff, der sich durch eine hohe Beständigkeit im Hinblick auf Relaxationserscheinungen auszeichnet. Bei nachlassender Anpressung kehrt der Gleitring daher stets wieder in die Gestalt zurück, die ihm während seiner Formgebung verliehen wurde.

Die Dichtkante des Gleitringes ist gleichwohl durch den Druck des abzudichtenden Mediums oberflächeneben in das im im übrigen herstellungsbedingt im wesentlichen rechteckige Profil einfederbar, was es gewährleistet, daß die Dichtkante unabhängig von der Nachgiebigkeit des Gleitringes in sich selbst beweglich ist. Sie vermag dadurch Oberflächenunebenheiten der miteinerander in Eingriff stehenden Flächen auszugleichen. Örtliche Überlastungen können nicht mehr auftreten. Der Zustand, in welchem die Dichtlippe oberflächeneben in das Profil des Gleitringes eingefedert ist, kann dem normalen Betriebszustand entsprechen.

Um die Nachgiebigkeit der Dichtkante zu verbessern hat es sich als vorteilhaft bewährt, wenn der Gleitring herstellungsbedingt auf der von der Dichtkante axial abgewandten Seite mit einer Ausnehmung versehen ist. Diese läßt sich besonders einfach erhalten durch Anbringung einer Anfasung an dem den Gleitring begrenzenden Profil. Zweckmäßig hat eine solche Anfasung eine mit der Dichtkante im wesentlichen übereinstimmende Erstreckung in radialer und/oder axialer Richtung. Sie kann sich herstellungsbedingt im wesentlich parallel erstrecken zu der Kegelstumpffläche, welche das in axialer Richtung vorspringende Profil der Dichtkante auf der axial gegenüberliegende Seite des Gleitringes begrenzt. Die elastische Einfederung der Dichtkante bei ansteigendem Druck P des abzudichtenden Mediums vollzieht sich in diesem Falle ganz besonders gleichmäßig, was sich als vorteilhaft erwiesen hat im Hinblick auf die Erzielung einer besonders guten Gebrauchsdauer.

Je nach konkreter Ausbildung kann die Dichtkante im Bereich der radial innen- oder radial außenliegenden Umfangsfläche des Gleitringes angeordnet sein. Bei einer Anordnung im Bereich der innenliegenden Umfangsfläche ergibt sich eine vergleichsweise niedrigere Umfangsgeschwindigkeit in Bezug auf die Gegenfläche, was im Hinblick auf die Erzielung einer besonders guten Gebrauchsdauer von Vorteil ist.

Um die zur Erzielung eines guten Abdichtungsergebnisses erforderliche, kontinuierliche Berührung auch bei Gegenflächen zu gewährleisten, die unter normalen Betriebsbedingungen axiale Relativverlagerungen erfahren, hat es sich als vorteilhaft erwiesen, wenn der Gleitring elastisch an die Gegenfläche angedrückt ist und wenn für die Andrückung wenigstens eine Druckfeder vorgesehen ist. Diese kann gegebenenfalls als Tellerfeder ausgebildet sein und die Dichtungsachse ganz umschließen. Es ist aber auch möglich, mehrere Druckfedern zu verwenden und gleichmäßig in Umfangsrichtung zu verteilen.

Die Druckfeder ist zweckmäßig zwischen dem Stützring und dem Gehäuse angeordnet. Sie kann dabei beiderseits in der Weise festgelegt sein, daß sie die von ihr in axialer Richtung federnd aufeinander abgestützten Teile im wesentlichen unverdrehbar verbindet. Der Gegenstand der Erfindung wird nachfolgend an Hand der in der Anlage beigefügten Figuren weiter verdeutlicht. Es zeigen:

Figur 1: Eine Gleitringdichtung, in halbgeschnittener Darstellung, bei der die Dichtkante im Bereich der inneren Umfangsfläche des Gleitringes vorgesehen ist.

Figur 2: Eine Ausführung, bei der die Dichtkante im Bereich der äußeren Umfangsfläche des Gleitringes vorgesehen ist.

Beide Figuren zeigen die dargestellten Gleitringdichtungen im drucklos eingebauten Zustand und in einer Verwendung, in der ein Gehäuse 2 gegenüber einer Welle 1 abgedichtet werden soll.

Die Welle 1 ist jeweils mit einem Ringflansch 15 versehen, dessen Stirnfläche zugleich die Gegenfläche 3 für den Gleitring 4 bildet. Dieser ist jeweils mit einem Stützring 11 aus tiefgezogenem Stahlblech verbunden, beispielsweise durch gegenseitiges Verkleben. Der Stützring 11 hat ein Z-förmiges Profil, an welches an dem dem Gleitring 4 aus PTFE axial gegenüberliegenden Ende ein Lippenring 12 aus Gummi anvulkanisiert ist. Dieser ist mit einer Dichtkante versehen, die die Zylinderfläche 13 des Gehäuses 2 unter einer radial gerichteten Vorspannung dichtend berührt. Aufgrund des niedrigeren Reibungskoeffizienten des aus PTFE bestehenden Gleitringes 4 inbezug auf den aus Gummi bestehenden Lippenring 12 ist unter Verminderung einer zusätzlichen Verdrehsicherung unter normalen Betriebsbedingungen eine unverdrehbare Zuordnung zu dem Gehäuse gewährleistet. Der Gleitring 4 hat in allen Fällen ein im wesentlichen rechteckig begrenztes Profil.

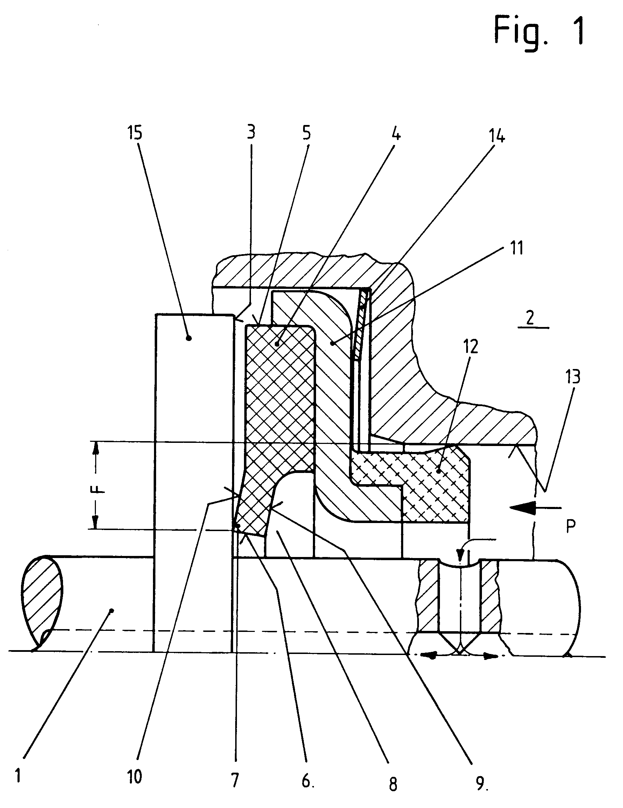

Bei der Ausführung nach Figur 1 weist der Gleitring 4 auf der der Gegenfläche 3 zugewandten Seite im Bereich seiner radial innenliegenden Umfangsfläche 6 die Dichtkante 7 auf, die herstellungsbedingt sein ansonsten im wesentlichen rechteckig begrenztes Profil in axialer Richtung überragt. Der Gleitring 4 ist darüberhinaus auf der der Dichtkante 7 axial gegenüberliegenden Seite mit einer in das Profil eingreifenden Ausnehmung 8 versehen. Diese ist durch eine Kegelstumpffläche begrenzt, die in einen Radius ausläuft.

Die Kegelstumpffläche erstreckt sich parallel zu der Kegelstumpffläche 10, welche die Dichtkante 7 in Richtung der Gegenfläche 3 begrenzt. Der Durchmesser der Zylinderfläche 13 ist geringfügig größer als der Durchmesser der Dichtkante 7. Die zwischen beiden ermittelbare Differenzfläche mit der radialen Erstreckung F beschreibt die hydraulich wirksame Fläche, die dem Druck P des abzudichtenden Mediums für die Anpressung der Dichtkante 7 an die Gegenfläche 3 zur Verfügung steht. Sie kann problemlos so gering bemessen werden, daß sich unter normalen Betriebsbedingungen eine nur anteilige Einfederung der Dichtkante 7 in das ansonsten rechteckig begrenzte Profil des Gleitringes 4 ergibt, d.h. in die Radialebene der übrigen dem Gegenring gegenüberliegenden Begrenzungsfläche des Gleitringes 4. Die Einfederung wird durch die Ausnehmung 8 auf der der Dichtkante 7 axial gegenüberliegenden Seite des Gleitringes 4 begünstigt und gewährleistet die Erzielung einer guten Gebrauchsdauer.

Um auch in Fällen, in denen axiale Relativverlagerungen der Gegenfläche auftreten können ein gutes Abdichtungsergebnis zu erzielen, ist außerdem eine Tellerfeder 14 vorgesehen, die in dem axialen Spalt zwischen dem Stützring 11 und dem Gehäuse 2 angeordnet ist. Auch in solchen Fällen wird hierdurch eine sichere Anlage der Dichtkante 7 an der Gegenfläche 3 gewährleistet.

Die Dichtung zeichnet sich durch gute Notlaufeigenschaften aus. Sie eignet sich insbesondere für die verlustfreie Einspeisung eines in einem Gehäuse befindlichen, gasförmigen Mediums in die Bohrung einer Welle 1.

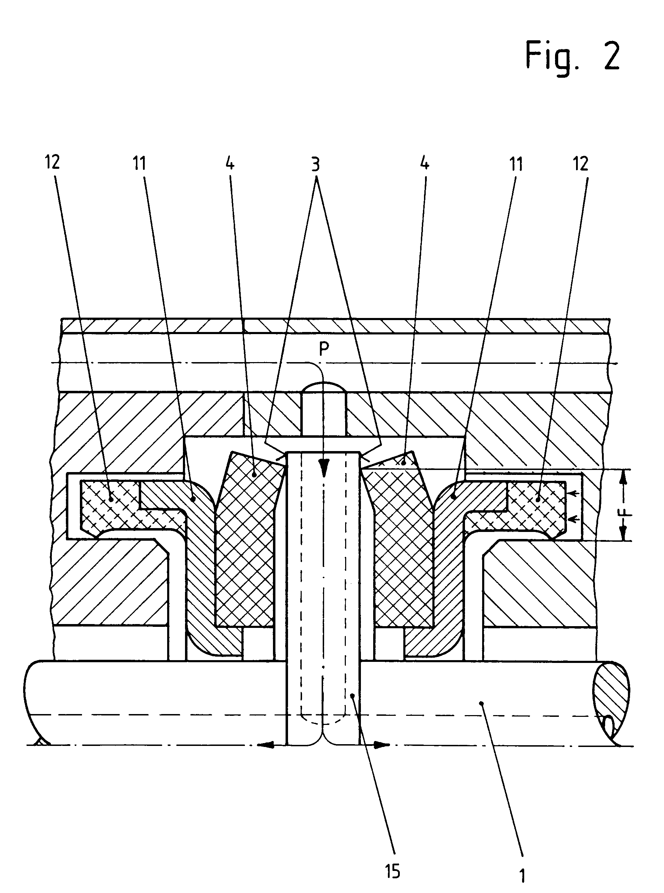

Die in Figur 2 gezeigte Gleitringdichtung ist in funktioneller Hinsicht der vorstehend beschriebenen ähnlich. In diesem Falle ist die Dichtkante 7 indessen im Bereich der radial äußeren Umfangsfläche des Gleitringes 4 vorgesehen. Die durch Anvulkanisieren mit dem Zwischenring 11 verbundene, aus Gummi bestehende Dichtlippe 12 ist dementsprechend einer Zylinderfläche 13 vergleichsweise kleineren Durchmessers zugeordnet, um durch den Druck des abzudichtenden Mediums eine Anpressung der Dichtkante 7 an die Gegenfläche 3 des Gegenringes 15 zu gewährleisten. Diesem ist auf der axial gegenüberliegenden Seite eine weitere Gleitringdichtung spiegelbildlich zugeordnet, wodurch die Anordnung die verlustfreie Übertragung abzudichtenden Mediums aus einem Hohlraum eines Gehäuses in die Bohrung einer Welle gestattet sowie eine entsprechende Übertragung in umgekehrter Richtung.

## Patentansprüche

1. Gleitringdichtung zur Abdichtung einer Welle (1) gegenüber einem Gehäuse (2), umfassend einen durch den Druck P des abzudichtenden Mediums an eine sich im wesentlichen in radialer Richtung erstreckende, relativ verdrehbare Gegenfläche (3) der Welle angepreßten Gleitring (4) aus PTFE, der ein im wesentlichen rechteckig begrenztes Profil aufweist mit einer radial nach innen und einer radial nach außen weisenden Umfangsfläche (5,6), die sich im wesentlichen parallel zur Achse der Gleitringdichtung erstrecken, dadurch gekennzeichnet, daß der Gleitring (4) mit einer bei seiner Herstellung angeformten, das Profil axial in Richtung der Gegenfläche (3) überragenden Dichtkante (7) versehen ist, daß die Dichtkante (7) einen Durchmesser aufweist, der im wesentlichen übereinstimmt mit dem Durchmesser der dem Druck (P) des abzudichtenden Mediums ausgesetzten Umfangsfläche (6), daß der Gleitring (4) durch den Druck (P) des abzudichtenden Mediums in Richtung der Gegenfläche (3) verschoben wird, wodurch die Dichtkante (7) in das Profil des Gleitringes (4) einfedert, daß der Gleitring (4) an einem Stützring (11) festgelegt ist, daß an dem Stützring (11) eine Dichtlippe (12) aus gummielastischem Werkstoff angeformt ist, daß die Dichtlippe (12) unter elastischer Vorspannung an eine Zylinderfläche (13) des Gehäuses (2) angepreßt ist, und daß die zwischen der Zylinderfläche (13) und der Dichtkante (7) ermittelbare hydraulisch wirksame Fläche mit der radialen Erstreckung F so gering bemessen wird, daß sich unter normalen Betriebsbedingungen nur eine geringe Einfederung der Dichtkante (7) in das Profil des Gleitringes (4) ergibt.

2. Gleitringdichtung nach Anspruch 1, dadurch gekennzeichnet, daß der Gleitring (4) bei seiner Formgebung auf der der Dichtkante (7) axial gegenüberliegenden Seite mit einer Ausnehmung (8) versehen ist.

3. Gleitringdichtung nach Anspruch 2, dadurch gekennzeichnet, daß die Ausnehmung (8) durch eine bei der Formgebung an dem Gleitring (4) vorgesehene Anfasung (9) begrenzt ist.

4. Gleitringdichtung nach Anspruch 3, dadurch gekennzeichnet, daß die Anfasung (9) eine mit der Dichtkante (7) im wesentlichen übereinstimmende, radiale und/oder axiale Erstreckung hat.

5. Gleitringdichtung nach Anspruch 4, dadurch gekennzeichnet, daß die Dichtkante (7) herstellungsbedingt durch eine sich im wesentlichen parallel zu der Anfasung (9) erstreckende Kegelstumpffläche (10) begrenzt ist.

6. Gleitringdichtung nach einem der Ansprüche 1 bis 5, dadurch gekennzeichnet, daß der Gleitring (4) elastisch an die Gegenfläche (3) angepreßt ist und daß für die Anpressung wenigstens eine Druckfeder (14) vorgesehen ist.

7. Gleitringdichtung nach Anspruch 6, dadurch gekennzeichnet, daß die Druckfeder (14) zwischen dem Stützring (11) und dem Gehäuse (2) angeordnet ist.

8. Gleitringdichtung nach Anspruch 6 oder 7, dadurch gekennzeichnet, daß die Druckfeder (14) die von ihr in axialer Richtung aufeinander abgestützten Teile im wesentlichen unverdrehbar verbindet.

## Claims

1. An axial face seal for sealing a shaft (1) relative to a housing (2), comprising a PTFE slide ring (4) which is pressed by the pressure P of the medium to be sealed off against an essentially radially extending countersurface (3), capable of relative rotation, of the shaft and has an essentially rectangular boundary profile with a radially inward- and a radially outward-facing peripheral surface (5, 6) which extend essentially parallel to the axis of the axial face seal, characterised in that the slide ring (4) is provided with a sealing edge (7) formed on it during its manufacture and projecting axially beyond the profile in the direction of the countersurface (3), in that the sealing edge (7) has a diameter which corresponds essentially to the diameter of the peripheral surface (6) exposed to the pressure (P) of the medium to be sealed off, in that the slide ring (4) is displaced in the direction of the countersurface (3) by the pressure (P) of the medium to be sealed off, the sealing edge (7) deflecting into the profile of the slide ring (4) as a result, in that the slide ring (4) is fixed on a back-up ring (11), in that a sealing lip (12) of rubber-elastic material is formed on the back-up ring (11), in that the sealing lip (12) is pressed against a cylindrical surface (13) of the housing (2) with elastic prestress and in that the radial extent F of the hydraulically effective surface determinable between the cylindrical surface (13) and the sealing edge (7) can be so small that only a slight deflection of the sealing edge (7) into the profile of the slide ring (4) occurs under normal operating conditions.

2. An axial face seal according to claim 1, characterised in that, during its shaping, the slide ring (4) is provided with a recess (8) on the side axially opposite the sealing edge (7).

3. An axial face seal according to claim 2, characterised in that the recess (8) is bounded by a chamfer (9) provided on the slide ring (4) during the shaping process.

4. An axial face seal according to claim 3, characterised in that the chamfer (9) has a radial and/or axial extent which corresponds essentially to that of the sealing edge.

5. An axial face seal according to claim 4, characterised in that the sealing edge (7) is, by virtue of its manufacture, bounded by a frustoconical surface (10) extending essentially parallel to the chamfer (9).

6. An axial face seal according to any of claims 1 to 5, characterised in that the slide ring (4) is pressed elastically against the countersurface (3) and in that at least one pressure spring (14) is provided for the contact pressure.

7. An axial face seal according to claim 6, characterised in that the pressure spring (14) is arranged between the back-up ring (11) and the housing (2).

8. An axial face seal according to either of claims 6 and 7, characterised in that the pressure spring (14) connects the parts supported upon one another by it in the axial direction in such a way that rotation is essentially prevented.

## Revendications

1. Garniture d'étanchéité à anneau glissant pour l'étanchéité d'un arbre (1) par rapport à un carter (2), comportant un anneau glissant (4) en polytetrafluoréthylène (PTFE), appliqué sous l'effet de la pression (P) de l'agent à étancher contre une surface opposée (3) de l'arbre, pouvant tourner relativement et s'étendant sensiblement dans une direction radiale, cet anneau glissant ayant un profil de délimitation sensiblement rectangulaire, avec une surface circonférentielle dirigée radialement vers l'intérieur (5) et une surface circonférentielle dirigée radialement vers l'extérieur, qui s'étendent sensiblement parallèlement à l'axe de la garniture d'étanchéité à anneau glissant, caractérisée en ce que l'anneau glissant (4) est pourvu d'un chant d'étanchéité (7), formé lors de sa fabrication et faisant saillie axialement du profil en direction de la surface opposée (3), en ce que le chant d'étanchéité (7) a un diamètre qui correspond sensiblement au diamètre de la surface circonférentielle (6) soumise à la pression (P) de l'agent à étancher, en ce que l'anneau glissant (4) est déplacé en direction de la surface opposée (3) dans la pression (P) de l'agent à étancher, de sorte que le chant d'étanchéité (7) rentre élastiquement dans le profil de l'anneau glissant (4), en ce que l'anneau glissant (4) est fixé sur un anneau d'appui (11), en ce que sur l'anneau d'appui (11) est formée une lèvre d'étanchéité (12) constituée d'un matériau ayant l'élasticité du caoutchouc, en ce que la lèvre d'étanchéité (12) est appliquée sous l'effet d'une précontrainte élastique contre une surface cylindrique (13) du carter (2) et en ce que la surface hydrauliquement active pouvant être obtenue entre la surface cylindrique (13) et le chant d'étanchéité (7) est pourvue d'une dimension radiale F suffisamment petite pour que, dans des conditions normales de service, il se produise seulement une petite rentrée élastique du chant d'étanchéité (7) dans le profil de l'anneau glissant (4).

2. Garniture d'étanchéité à anneau glissant selon la revendication 1, caractérisée en ce que l'anneau glissant (4) est pourvu, lors de son formage, d'un évidement (8) situé sur le côté axialement opposé au chant d'étanchéité (7).

3. Garniture d'étanchéité à anneau glissant selon la revendication 2, caractérisée en ce que l'évidement (8) est délimité par un biseau (9) créé lors du formage sur l'anneau glissant (4).

4. Garniture d'étanchéité à anneau glissant selon la revendication 3, caractérisée en ce que le biseau (9) a une étendue radiale et/ou axiale correspondant sensiblement au chant d'étanchéité (7).

5. Garniture d'étanchéité à anneau glissant selon la revendication 4, caractérisée en ce que le chant d'étanchéité (7) est délimité, en fonction de la fabrication, par une surface tronconique (10) s'étendant sensiblement parallèlement au biseau (9).

6. Garniture d'étanchéité à anneau glissant selon une des revendications 1 à 5, caractérisée en ce que l'anneau glissant (4) est appliqué élastiquement contre la surface opposée (3) et en ce qu'il est prévu au moins un ressort de pression (14) pour cette application.

7. Garniture d'étanchéité à anneau glissant selon la revendication 6, caractérisée en ce que le ressort de pression (14) est disposé entre l'anneau d'appui (11) et le carter (2).

8. Garniture d'étanchéité à anneau glissant selon la revendication 6 ou 7, caractérisée en ce que le ressort de pression (14) relie de façon sensiblement non tournante les parties soutenues par lui l'une contre l'autre dans une direction axiale.

# Fig. 1

Fig. 2